# EUROPEAN PATENT APPLICATION

(11) **EP 4 813 590 A1**
(43) Date of publication of application: **30.09.2026**
(21) Application number: 23959409.6
(22) Date of filing: 21.11.2023
(51) Int. Cl.: B25J 19/06, B25J 15/06

(54) **ABNORMALITY DETECTION DEVICE, ADSORPTION APPARATUS, AND ABNORMALITY DETECTION METHOD**

(71) Applicant: SMC Corporation, Tokyo 104-0031 (JP)
(72) Inventor: MORITA, Kosuke, Kashiwa-shi, Chiba 277-0871 (JP); WATANABE, Rino, Kashiwa-shi, Chiba 277-0871 (JP)
(74) Representative: Keil & Schaafhausen Patentanwälte PartGmbB
(86) International application number: PCT/JP2023/041702
(87) International publication number: WO 2025/109664

(57) **Abstract**

An abnormality detection device (100) according to the present disclosure comprises: an information acquisition unit (46) that acquires, on the basis of a detection signal from a vacuum pressure sensor (28), information indicating the vacuum pressure of a communication path (20) of an adsorption apparatus (12); and an abnormality determination unit (48) that determines that there is an abnormality if a first vacuum pressure (VP1) is equal to or greater than a predetermined first threshold value (TH1), the first vacuum pressure (VP1) being the vacuum pressure of the communication path in a case where a vacuum pressure is applied to the communication path from a vacuum source (14) and an object to be adsorbed is not adsorbed by an adsorption unit (26) provided in the adsorption apparatus.

## Description

### TECHNICAL FIELD

The present disclosure relates to an abnormality detection device, a suction device (adsorption apparatus), and an abnormality detection method.

### BACKGROUND ART

JP 2005-009337 A discloses a failure diagnosis device for a vacuum pump. According to JP 2005-009337 A, the failure diagnosis device diagnoses a failure of a vacuum pump based on a temperature, a drive current, and the like of the vacuum pump.

### SUMMARY OF THE INVENTION

There has been a demand for an abnormality detection device, a suction device, and an abnormality detection method capable of satisfactorily detecting an abnormality of the suction device for suctioning a suction object by using vacuum pressure.

An object of the present invention is to meet the aforementioned challenge.

A first aspect of the present invention is characterized by an abnormality detection device that detects an abnormality of a suction device configured to suction a suction object by vacuum pressure, the suction device including a communication passage connected to a vacuum source configured to generate the vacuum pressure, a suction unit configured to suction the suction object by using the vacuum pressure applied from the vacuum source via the communication passage; and a vacuum pressure sensor configured to output a detection signal corresponding to the vacuum pressure in the communication passage, and the abnormality detection device includes an information acquisition unit configured to acquire information indicating the vacuum pressure in the communication passage on a basis of the detection signal, and an abnormality determination unit configured to determine that the abnormality is present in a case where a first vacuum pressure is higher than or equal to a first threshold value that is predetermined, the first vacuum pressure being the vacuum pressure in the communication passage in a case where the vacuum pressure is applied from the vacuum source to the communication passage and the suction object is not suctioned by the suction unit.

A second aspect of the present invention is characterized by the suction device including the abnormality detection device.

A third aspect of the present invention is characterized by an abnormality detection method for detecting an abnormality of a suction device configured to suction a suction object by vacuum pressure, the suction device including a communication passage connected to a vacuum source configured to generate the vacuum pressure, a suction unit configured to suction the suction object by using the vacuum pressure applied from the vacuum source via the communication passage, and a vacuum pressure sensor configured to output a detection signal corresponding to the vacuum pressure in the communication passage, and the method includes an information acquisition step of acquiring information indicating the vacuum pressure in the communication passage on a basis of the detection signal, and an abnormality determination step of determining that the abnormality is present in a case where a first vacuum pressure is higher than or equal to a first threshold value that is predetermined, the first vacuum pressure being the vacuum pressure in the communication passage in a case where the vacuum pressure is applied from the vacuum source to the communication passage and the suction object is not suctioned by the suction unit.

According to the present invention, an abnormality of the suction device is easily and accurately detected.

### BRIEF DESCRIPTION OF DRAWINGS

[FIG. 1] FIG. 1 is a schematic diagram illustrating a configuration of a suction system according to an embodiment;
[FIG. 2] FIG. 2 is a perspective view of a suction device provided for the suction system;
[FIG. 3] FIG. 3 is a flowchart of an abnormality detection method; and
[FIG. 4] FIG. 4 is another flowchart of the abnormality detection method.

### DETAILED DESCRIPTION OF THE INVENTION

The failure diagnosis device according to JP 2005-009337 A has at least the following problems. That is, it is not always possible for the failure diagnosis device to satisfactorily detect an abnormality of the suction device that suctions a suction object by using vacuum pressure (negative pressure) generated by the vacuum pump. For example, the suction device includes a tube to which the vacuum pressure is applied. The tube is provided with a filter for preventing the entry of foreign matter through a vacuum port provided in the suction device. It is difficult to detect clogging of the filter on the basis of the temperature, the drive current, and the like of the vacuum pump. This is because the temperature, the drive current, and the like of the vacuum pump do not necessarily change greatly depending on whether or not the filter is clogged.

Based on the above preliminary description, an embodiment will be described below.

### [Embodiments]

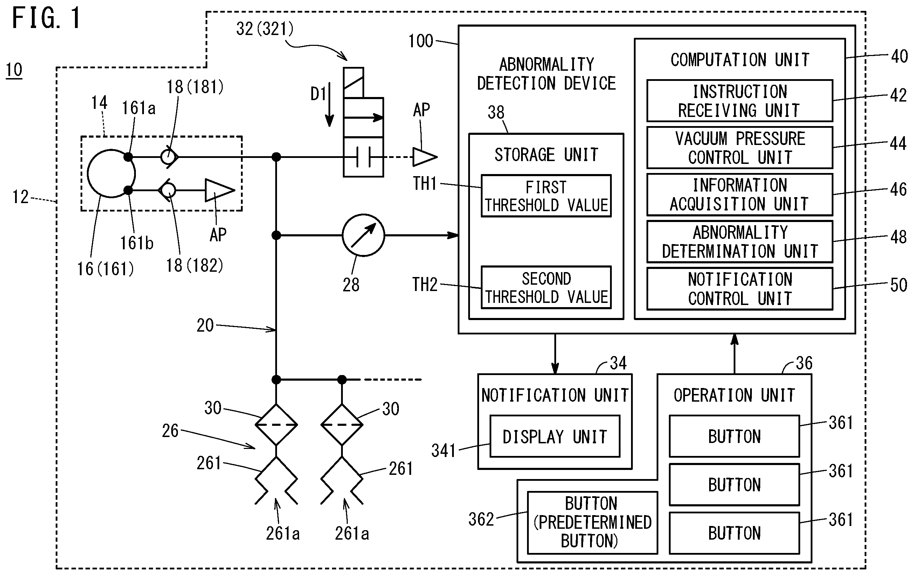

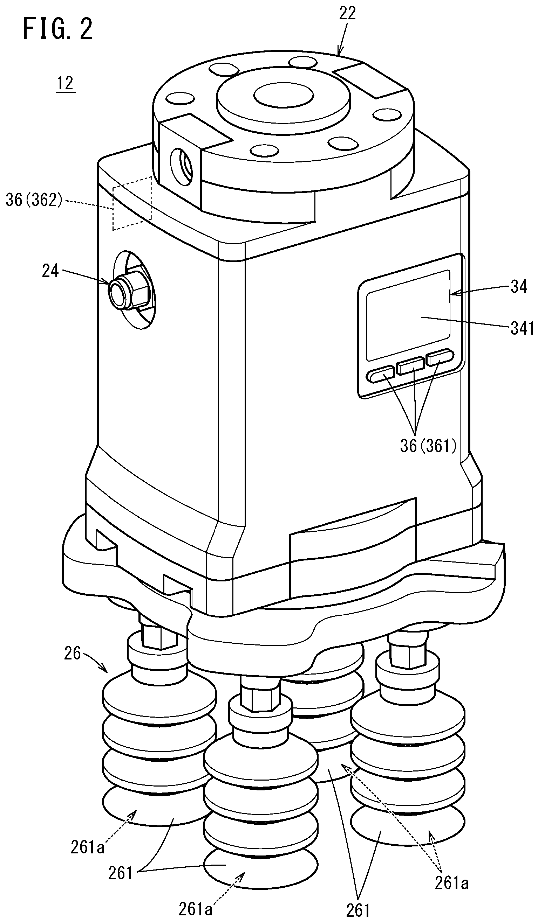

FIG. 1 is a schematic diagram illustrating a configuration of a suction system 10 according to an embodiment. FIG. 2 is a perspective view of a suction device 12 provided for the suction system 10.

As shown in FIG. 1, the suction system 10 includes the suction device 12.

The suction device 12 is a device that suctions a suction object (not shown) using vacuum pressure (negative pressure). The suction device 12 is, for example, a vacuum gripper as shown in FIG. 2. The suction device 12 may be realized as an end effector mounted on an industrial robot arm (not shown). As shown in FIG. 1, the suction device 12 includes a vacuum source 14 and a communication passage 20 connected to the vacuum source 14. The communication passage 20 is formed of, for example, a tube. The suction device 12 will be described in more detail later.

The vacuum source 14 includes a vacuum device 16 that is a device for applying a vacuum pressure to the communication passage 20. The vacuum device 16 includes, for example, a vacuum pump 161, but is not limited thereto. For example, a vacuum ejector may be provided as the vacuum device 16.

The vacuum pump 161 includes an intake port 161a and an exhaust port 161b. The intake port 161a is connected to the communication passage 20 of the suction device 12 described above. The vacuum pump 161 suctions air in the communication passage 20 through the intake port 161a. Thus, the degree of vacuum in the communication passage 20 is increased. That is, the air in the communication passage 20 is suctioned into the vacuum source 14 via the intake port 161a, whereby vacuum pressure is applied to the communication passage 20. The air suctioned through the intake port 161a is exhausted through the exhaust port 161b into the atmosphere AP.

The vacuum source 14 may further include a check valve 18 for preventing back-flowing of air. A plurality of check valves 18 (181, 182) may be provided in the vacuum source 14. For example, the vacuum source 14 may include a first check valve 181 and a second check valve 182 shown in FIG. 1. The first check valve 181 is connected to the intake port 161a. The first check valve 181 prevents air from flowing from the vacuum pump 161 toward the communication passage 20. The second check valve 182 is connected to the exhaust port 161b. The second check valve 182 prevents the air exhausted from the exhaust port 161b from flowing toward the vacuum pump 161.

As shown in FIG. 2, the suction device 12 includes an arm coupling portion 22, a communication connector portion 24, and a suction unit 26. As shown in FIG. 1, the suction device 12 further includes a vacuum pressure sensor 28, a filter 30, an atmospheric relief device 32, a notification unit 34, an operation unit 36, and an abnormality detection device 100.

The arm coupling portion 22 includes, for example, a connector that can be coupled to the industrial robot arm (not illustrated) described above. The suction device 12 can be attached to the industrial robot arm via the arm coupling portion 22.

The communication connector portion 24 includes a connector to which a communication cable connected to the suction device 12 and the industrial robot arm (not shown) described above can be connected. For example, the abnormality detection device 100 of FIG. 1 and the industrial robot arm (not shown) can be communicably connected to each other via the communication connector portion 24 and a communication cable connected to the communication connector portion 24. The communication connector portion 24 may be communicably connected to a machine, an electronic device, or the like other than the industrial robot arm via a communication cable.

The suction unit 26 is provided at one end portion of the communication passage 20. As shown in FIG. 2, while the vacuum source 14 is disposed at one end portion of the communication passage 20, the vacuum source 14 is disposed at another end portion of the communication passage 20. The suction unit 26 includes a member that can suction a suction object by using vacuum pressure. The member includes, for example, a vacuum pad 261. As shown in FIGS. 1 and 2, the suction unit 26 may include a plurality of vacuum pads 261. Four of the vacuum pads 261 are shown in FIG. 2. Some of the four vacuum pads 261 are not shown in FIG. 1.

The suction unit 26 has a vacuum port 261a. Each of the plurality of vacuum pads 261 has the vacuum port 261a. Each of the vacuum ports 261a communicates with the communication passage 20. The suction unit 26 applies vacuum pressure to the suction object via the vacuum ports 261a to suction the suction object.

The vacuum pressure sensor 28 is a sensor that outputs a detection signal corresponding to the vacuum pressure in the communication passage 20. The vacuum pressure sensor 28 includes a pressure sensor such as a vacuum gauge. The vacuum pressure sensor 28 is provided in the communication passage 20. In the present embodiment, a case where one vacuum pressure sensor 28 is provided for the plurality of vacuum pads 261 will be described, but the present invention is not limited thereto. The vacuum pressure sensor 28 may be provided for each of the plurality of vacuum pads 261.

The filter 30 is a member that prevents foreign matter such as dust from entering the suction device 12 via the vacuum port 261a. The filter 30 may include a mesh member that allows air to pass therethrough but prevents foreign matter from passing therethrough. The filter 30 is provided in the communication passage 20. For example, the filter 30 may be provided at a portion between the suction unit 26 and the vacuum pressure sensor 28 in the communication passage 20. The suction device 12 may include a plurality of filters 30 corresponding to the plurality of vacuum pads 261 (see also FIG. 2).

The atmospheric relief device 32 is a device (vacuum breaker) for returning the air pressure in the communication passage 20 to which the vacuum pressure is applied, to the atmospheric pressure, as necessary. As shown in FIG. 1, the atmospheric relief device 32 includes, for example, a solenoid valve 321. In response to the operation of the solenoid valve 321, the atmospheric relief device 32 is selectively switched between a non-open state and an open state.

The non-open state is a state in which the communication passage 20 and the atmosphere AP do not communicate with each other via the atmospheric relief device 32. An example of a case where the atmospheric relief device 32 is in the non-open state is shown in FIG. 1. In the case where the atmospheric relief device 32 is in the non-open state, the gas is prohibited from entering and exiting the communication passage 20 via the atmospheric relief device 32. In this case, it is possible to apply a vacuum pressure to the suction object from the vacuum source 14 via the vacuum port 261a. That is, when the atmospheric relief device 32 is in the non-open state, the suction object can be suctioned by the suction unit 26.

The open state is a state in which the communication passage 20 and the atmosphere AP communicate with each other via the atmospheric relief device 32. The atmospheric relief device 32 shown in FIG. 1 can be driven along an arrow D1 to transition from the non-open state to the open state. In the case where the atmospheric relief device 32 is in the open state, the gas is allowed to flow into and out of the communication passage 20 via the atmospheric relief device 32. In this case, even when the vacuum source 14 is driven, the air pressure in the communication passage 20 is maintained equal to the atmospheric pressure. Therefore, the vacuum pressure is not applied to the suction object. That is, in the case where the atmospheric relief device 32 is in the open state, the suction of the suction object by the suction unit 26 using the vacuum pressure is not performed. In the case where the suction object is suctioned by the suction unit 26, the suction of the suction unit 26 with respect to the suction object can be released by causing the atmospheric relief device 32 to transition to the open state. The atmospheric relief device 32 in the open state is driven in the direction opposite to the arrow D1 to return to the non-open state.

The notification unit 34 includes a notification device for notifying a user of the suction device 12 of an abnormality when the suction device 12 is abnormal. The notification device includes, for example, a display unit 341 capable of displaying information, a lamp (not illustrated) capable of blinking, a buzzer (speaker) (not illustrated) capable of emitting sound, and the like. Each of the display unit 341 and the lamp (not shown) may include a light emitting element such as a light emitting diode. The display unit 341 includes, for example, a seven-segment display, but is not limited thereto. The notification unit 34 can be controlled by the abnormality detection device 100 described later.

The operation unit 36 includes an interface used by a user to issue an instruction to the suction device 12. The operation unit 36 includes, for example, a button 361 that can be operated by the user. The suction device 12 may include a plurality of buttons 361. The operation unit 36 includes a predetermined button 362. The predetermined button 362 may be disposed at a portion of the suction device 12 different from the portion where the plurality of buttons 361 are disposed (also see FIG. 2), but is not limited thereto.

The abnormality detection device 100 is a device for detecting an abnormality of the suction device 12. The abnormality detection device 100 may be included in, for example, a microcontroller (computer) for controlling the suction device 12. The abnormality detection device 100 includes a storage unit 38 and a computation unit 40.

The storage unit 38 includes one or more memories (not illustrated). More specifically, the storage unit 38 includes a non-volatile memory such as a ROM (Read Only Memory) or a flash memory or the like, and a volatile memory such as a RAM (Random Access Memory) or the like. The non-volatile memory stores, for example, a computer-executable program. The volatile memory stores, for example, data temporarily necessary when a processor (computation unit 40) described later performs computation based on a program.

As shown in FIG. 1, the storage unit 38 stores a first threshold value TH1 (information indicating the first threshold value TH1) and a second threshold value TH2 (information indicating the second threshold value TH2). The first threshold value TH1 indicates an upper limit of a normal vacuum pressure applied to the communication passage 20 in the case where the vacuum source 14 is driven in a predetermined first operation mode and the suction object is not suctioned by the suction unit 26. In the predetermined first operation mode, the vacuum source 14 is activated to suction air with predetermined force. In contrast, the second threshold value TH2 indicates a lower limit of a normal vacuum pressure applied to the communication passage 20 in the case where the vacuum source 14 is driven in a predetermined second operation mode and the vacuum port 261a is closed by the suction object. In the predetermined second operation mode, the vacuum source 14 is driven to suction air with predetermined force. The force of the drawn air in the predetermined first operation mode and the force of the drawn air in the predetermined second operation mode may be different from each other or may coincide with each other. The first threshold value TH1 and the second threshold value TH2 are determined in advance based on, for example, an experiment.

The computation unit 40 includes a predetermined processing circuitry (not shown). The processing circuitry includes one or more processors such as a central processing unit (CPU) and a graphics processing unit (GPU). At least a portion of the processing circuitry may be realized by an integrated circuit such as an ASIC (Application Specific Integrated Circuit) or an FPGA (Field-Programmable Gate Array) or the like.

As shown in FIG. 1, the computation unit 40 includes an instruction receiving unit 42, a vacuum pressure control unit 44, an information acquisition unit 46, an abnormality determination unit 48, and a notification control unit 50. The instruction receiving unit 42, the vacuum pressure control unit 44, the information acquisition unit 46, the abnormality determination unit 48, and the notification control unit 50 are realized by the computation unit 40 (processor) executing a program stored in the storage unit 38 (memory). At least a portion of the instruction receiving unit 42, the vacuum pressure control unit 44, the information acquisition unit 46, the abnormality determination unit 48, and the notification control unit 50 may be realized by an integrated circuit such as the ASIC or the FPGA described above.

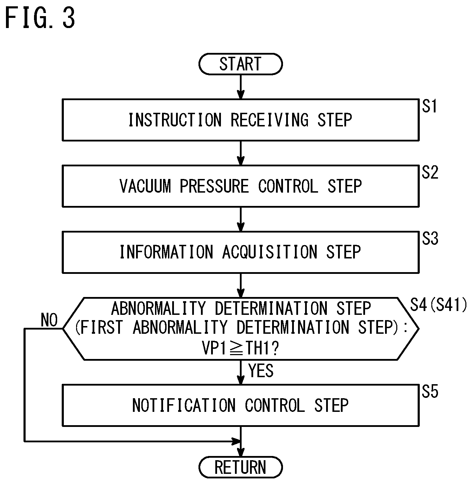

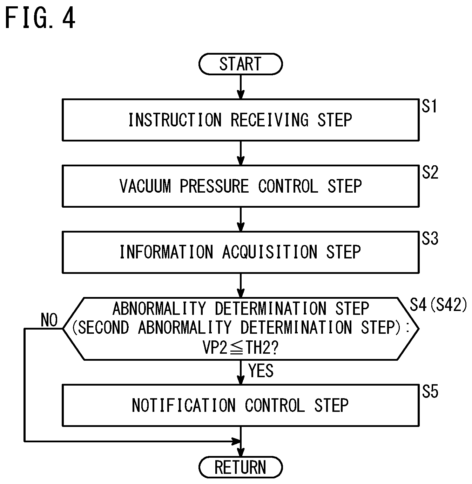

The instruction receiving unit 42 receives an execution instruction for causing the abnormality detection device 100 to execute the abnormality detection method (also see FIGS. 3 and 4). The execution instruction can be issued, for example, by the user operating a predetermined button 362 provided in the operation unit 36. Note that the execution instruction may be automatically issued to the abnormality detection device 100 at a time designated in advance. The execution instruction may be automatically issued to the abnormality detection device 100 at the timing when the suction device 12 (industrial robot arm) is activated.

The vacuum pressure control unit 44 controls the vacuum source 14 and the atmospheric relief device 32. The vacuum pressure control unit 44 controls the atmospheric relief device 32 to cause the atmospheric relief device 32 to transition to the non-open state. The vacuum pressure control unit 44 drives the vacuum source 14 to cause the vacuum pump 161 to suction air. As a result, a vacuum pressure is applied to the communication passage 20.

At least one of the vacuum source 14 or the atmospheric relief device 32 may be controlled by a control device separate from the abnormality detection device 100. The control device includes, for example, a control circuit, a computer, and the like that are separate from the abnormality detection device 100. The vacuum pressure control unit 44 may issue an instruction to the control device to substantially control the vacuum source 14 and the atmospheric relief device 32.

The information acquisition unit 46 acquires vacuum pressure information on the basis of the detection signal of the vacuum pressure sensor 28. The vacuum pressure information is information indicating the vacuum pressure in the communication passage 20. The information acquisition unit 46 can acquire vacuum pressure information (first vacuum pressure information) indicating the first vacuum pressure VP1 and vacuum pressure information (first vacuum pressure information) indicating the second vacuum pressure VP2. The first vacuum pressure VP1 is a vacuum pressure applied to the communication passage 20 in the case where the vacuum source 14 is driven in the predetermined first operation mode and the suction object is not suctioned by the suction unit 26. The second vacuum pressure VP2 is a vacuum pressure applied to the communication passage 20 in the case where the vacuum source 14 is driven in the predetermined second operation mode and the vacuum port 261a is closed by the suction object. Note that, regarding the second vacuum pressure VP2, the suction object to be suctioned by the suction unit 26 may be prepared by the user.

The abnormality determination unit 48 can execute a first abnormality determination and a second abnormality determination, which will be described next, based on the vacuum pressure information.

In the first abnormality determination, the abnormality determination unit 48 determines whether or not foreign matter is present in the communication passage 20 on the basis of whether or not the first vacuum pressure VP1 is higher than or equal to the first threshold value TH1 (VP1 ≥ TH1). For example, in the case where the first vacuum pressure VP1 is higher than or equal to the first threshold value TH1, the abnormality determination unit 48 can determine that the filter 30 provided in the communication passage 20 is clogged with foreign matter such as dust.

The reason why it can be determined whether or not foreign matter is present in the communication passage 20 on the basis of whether or not the first vacuum pressure VP1 is higher than or equal to the first threshold value TH1 is as follows. That is, in the case where the suction object is not suctioned by the suction unit 26 and no foreign matter is present in the communication passage 20, the outside air is supplied to the communication passage 20 via the vacuum port 261a by driving the vacuum source 14. Thus, even when the vacuum source 14 is driven, the communication passage 20 is not evacuated. In other words, even when the vacuum source 14 is driven, the vacuum pressure in the communication passage 20 is suppressed to a certain level or lower as long as the vacuum port 261a is not closed by the suction object. More specifically, in the case where the vacuum source 14 is driven in the predetermined first operation mode and the vacuum port 261a is not closed by the suction object, the vacuum pressure in the communication passage 20 should be suppressed to be lower than the first threshold value TH1. On the other hand, in the case where foreign matter is present in the communication passage 20, the supply of the outside air to the communication passage 20 via the vacuum port 261a is impeded by the foreign matter. For example, in the case where the filter 30 is clogged with foreign matter, the supply of the outside air to the communication passage 20 via the vacuum port 261a is impeded by the foreign matter. Accordingly, the vacuum pressure in the communication passage 20 is increased in response to the driving of the vacuum source 14. As a result, the vacuum pressure in the communication passage 20 becomes higher than or equal to the first threshold value TH1. For this reason, in the case where the first vacuum pressure VP1 is higher than or equal to the first threshold value TH1, it can be determined that there is a high possibility that foreign matter is present in the communication passage 20.

In the second abnormality determination, the abnormality determination unit 48 determines whether or not there is an abnormality based on whether or not the second vacuum pressure VP2 is lower than or equal to the second threshold value TH2 (VP2 ≤ TH2). For example, in the case where the second vacuum pressure VP2 is lower than or equal to the second threshold value TH2, the abnormality determination unit 48 determines that there is an abnormality in the suction unit 26, the communication passage 20, the atmospheric relief device 32, the vacuum pump 161, and the like.

The reason why it can be determined whether or not there is an abnormality in the suction unit 26, the communication passage 20, the atmospheric relief device 32, the vacuum pump 161, and the like on the basis of whether or not the second vacuum pressure VP2 is lower than or equal to the second threshold value TH2 is as follows. That is, when the suction object is suctioned by the suction unit 26, the vacuum port 261a is closed by the suction object. Thus, the supply of the outside air to the communication passage 20 via the vacuum port 261a is limited by the suction object. As a result, the vacuum pressure in the communication passage 20 is increased to a certain level or higher in response to the driving of the vacuum source 14. More particularly, in response to the vacuum source 14 being driven in the predetermined second operation mode, the vacuum pressure in the communication passage 20 should exceed the second threshold value TH2. However, for example, in the case where the suction unit 26, the communication passage 20, or the like is damaged, the vacuum pressure is not normally applied to the communication passage 20. As a result, even in the case where the vacuum port 261a is closed and the vacuum source 14 is driven in the predetermined second operation mode, the vacuum pressure in the communication passage 20 becomes lower than or equal to the second threshold value TH2. Further, in the case where the atmospheric relief device 32, the vacuum pump 161, or the like is out of order, the vacuum pressure is not normally applied to the communication passage 20. As a result, the vacuum pressure detected by the vacuum pressure sensor 28 becomes lower than or equal to the second threshold value TH2. For this reason, in the case where the second vacuum pressure VP2 is lower than or equal to the second threshold value TH2, it can be determined that there is an abnormality in the suction unit 26, the communication passage 20, the atmospheric relief device 32, the vacuum pump 161, and the like.

The notification control unit 50 executes notification control in the case where the abnormality determination unit 48 determines that there is an abnormality. The notification control is control for notifying that there is an abnormality. The notification control unit 50 turns on, for example, the display unit 341 included in the notification unit 34 on the basis of the result of the first abnormality determination. Accordingly, the notification control unit 50 can notify the user that foreign matter is present in the communication passage 20. The notification control unit 50 also sounds a buzzer (not shown) provided in the notification unit 34, for example, on the basis of the result of the second abnormality determination. Accordingly, the notification control unit 50 can notify the user that there is an abnormality in the suction unit 26, the communication passage 20, the atmospheric relief device 32, the vacuum pump 161, or the like. The notification control unit 50 may sound a buzzer based on the result of the first abnormality determination, or may turn on the display unit 341 based on the result of the second abnormality determination.

FIG. 3 is a flowchart of the abnormality detection method. A flowchart in the case where the first abnormality determination is executed is shown in FIG. 3.

The abnormality detection device 100 described above can execute an abnormality detection method. The abnormality detection method can be realized by, for example, the computation unit 40 (processor) executing a predetermined program stored in the storage unit 38 (memory). As shown in FIG. 3, the abnormality detection method includes an instruction receiving step S1, a vacuum pressure control step S2, an information acquisition step S3, an abnormality determination step S4 (first abnormality determination step S41), and a notification control step S5.

In the instruction receiving step S1, the instruction receiving unit 42 receives an instruction to execute. In the instruction receiving step S1 shown in FIG. 3, the instruction receiving unit 42 receives an instruction to execute the first abnormality determination.

In the vacuum pressure control step S2, the vacuum pressure control unit 44 causes the vacuum source 14 to suction the air in the communication passage 20. As a result, a vacuum pressure is applied to the communication passage 20. The vacuum pressure control step S2 shown in FIG. 3 is executed such that the suction object is not suctioned by the suction unit 26. In other words, the vacuum pressure control step S2 shown in FIG. 3 is executed such that the vacuum port 261a is not closed by the suction object.

In the information acquisition step S3, the information acquisition unit 46 acquires the first vacuum pressure information. As described above, the vacuum pressure control step S2 shown in FIG. 3 is executed in a state where the suction object is not suctioned by the suction unit 26. Accordingly, the information acquisition unit 46 can acquire the first vacuum pressure information.

In the first abnormality determination step S41, the abnormality determination unit 48 compares the first vacuum pressure VP1 with the first threshold value TH1. The first vacuum pressure VP1 is indicated by the first vacuum pressure information. In the case where the first vacuum pressure VP1 is higher than or equal to the first threshold value TH1 (S41: YES), the abnormality determination unit 48 determines that there is an abnormality. More specifically, in the case where the first vacuum pressure VP1 is higher than or equal to the first threshold value TH1, the abnormality determination unit 48 can determine that there is a high possibility that foreign matter is present in the communication passage 20. In the case where the first vacuum pressure VP1 is less than the first threshold value TH1 (S41: NO), the abnormality determination unit 48 determines that there is no abnormality. More specifically, in the case where the first vacuum pressure VP1 is less than the first threshold value TH1, the abnormality determination unit 48 can determine that there is a high possibility that no foreign matter is present in the communication passage 20.

In the case where it is determined that there is an abnormality by the first abnormality determination step S41, the notification control step S5 is executed. In the notification control step S5, the notification control unit 50 controls the notification unit 34 to notify that there is an abnormality. For example, in the notification control step S5, the notification control unit 50 turns on the display unit 341. Thus, the user is notified that the suction device 12 is abnormal.

Note that the notification control step S5 may be executed when it is determined by the first abnormality determination step S41 that there is no abnormality. In this case, in the notification control step S5, the notification control unit 50 may control the notification unit 34 to notify that there is no abnormality in the suction device 12.

Thus, the abnormality detection method shown in FIG. 3 is completed.

FIG. 4 is another flowchart of the abnormality detection method. A flowchart in the case where the second abnormality determination is executed is shown in FIG. 4.

The abnormality detection device 100 can execute the abnormality detection method shown in FIG. 4. Similarly to the abnormality detection method shown in FIG. 3, the abnormality detection method shown in FIG. 4 includes the instruction receiving step S1, the vacuum pressure control step S2, the information acquisition step S3, an abnormality determination step S4, and the notification control step S5. The abnormality detection method shown in FIG. 4 is different from the abnormality detection method shown in FIG. 3 at least in that the second abnormality determination step S42 is executed in the abnormality determination step S4.

In the instruction receiving step S1, the instruction receiving unit 42 receives an instruction to execute. In the instruction receiving step S1 shown in FIG. 4, the instruction receiving unit 42 receives an instruction to execute the second abnormality determination.

In the vacuum pressure control step S2, the vacuum pressure control unit 44 causes the vacuum source 14 to suction the air in the communication passage 20. As a result, a vacuum pressure is applied to the communication passage 20. The vacuum pressure control step S2 shown in FIG. 4 is executed in a state where the suction object is prepared in advance and the vacuum port 261a is closed by the suction object.

In the information acquisition step S3, the information acquisition unit 46 acquires the second vacuum pressure information. As described above, the vacuum pressure control step S2 shown in FIG. 4 is executed such that the vacuum port 261a is closed by the suction object. Accordingly, the information acquisition unit 46 can acquire the second vacuum pressure information.

In the second abnormality determination step S42, the abnormality determination unit 48 compares the second vacuum pressure VP2 with the second threshold value TH2. The second vacuum pressure VP2 is indicated by the second vacuum pressure information. In the case where the second vacuum pressure VP2 is lower than or equal to the second threshold value TH2 (S42: YES), the abnormality determination unit 48 determines that there is an abnormality. More specifically, when the second vacuum pressure VP2 is lower than or equal to the second threshold value TH2, the abnormality determination unit 48 can determine that there is a high possibility that the suction unit 26, the communication passage 20, or the like is damaged. In the case where the second vacuum pressure VP2 is less than or equal to the second threshold value TH2, the abnormality determination unit 48 may determine that there is a high possibility that the atmospheric relief device 32, the vacuum pump 161, or the like is damaged. In the case where the second vacuum pressure VP2 is higher than the second threshold value TH2 (S42: NO), the abnormality determination unit 48 determines that there is no abnormality.

In the case where it is determined that there is an abnormality by the second abnormality determination step S42, the notification control step S5 is executed. In the notification control step S5, the notification control unit 50 controls the notification unit 34 to notify that there is an abnormality. For example, in the notification control step S5, the notification control unit 50 sounds a buzzer. Thus, the user is notified that the suction device 12 is abnormal.

Note that the notification control step S5 may be executed when it is determined by the second abnormality determination step S42 that there is no abnormality. In this case, in the notification control step S5, the notification control unit 50 may control the notification unit 34 to notify that there is no abnormality in the suction device 12.

Thus, the abnormality detection method shown in FIG. 4 is completed.

The embodiment may be modified as follows. In the following exemplary modifications, the description overlapping with the embodiment will be omitted as appropriate. In the drawings used in the following exemplary modifications, the same constituent elements as those described in the embodiment are denoted by the same reference numerals.

### (Exemplary Modification 1)

The abnormality detection device 100 may be provided separately from the suction device 12. For example, the abnormality detection device 100 may be provided in a control computer for controlling the above-described industrial robot arm (see the embodiment).

### (Exemplary Modification 2)

The notification control unit 50 may control a notification device provided outside the suction device 12 to notify the abnormality of the suction device 12. For example, the notification control unit 50 may control a notification device installed somewhere in a factory. More specifically, the notification control unit 50 may control, for example, a lamp, a speaker, a display, or the like installed in the factory.

### (Exemplary Modification 3)

The vacuum source 14 may be provided outside the suction device 12.

### (Exemplary Modification 4)

The abnormality detection method of FIG. 3 and the abnormality detection method of FIG. 4 may be combined as appropriate.

For example, the user may operate the operation unit 36 to arbitrarily select either the first abnormality determination (FIG. 3) or the second abnormality determination (FIG. 4). The abnormality detection device 100 may appropriately execute either the abnormality detection method of FIG. 3 or the abnormality detection method of FIG. 4 on the basis of the selection result.

Further, for example, the abnormality detection method (the second abnormality determination step S42) of FIG. 4 may be automatically started after the abnormality detection method (the first abnormality determination step S41) of FIG. 3 has been executed. The abnormality detection method (the first abnormality determination step S41) of FIG. 3 may be automatically started after the abnormality detection method (the second abnormality determination step S42) of FIG. 4 has been executed.

### (Combination of Multiple Exemplary Modifications)

The plurality of Exemplary Modifications described above may be combined as appropriate to the extent that no contradictions arise.

In relation to the above-described embodiment, the following Supplementary Notes are further disclosed.

### (Supplementary Note 1)

The abnormality detection device (100) according to the present disclosure detects the abnormality of the suction device (12) configured to suction the suction object by vacuum pressure, the suction device includes the communication passage (20) connected to the vacuum source (14) configured to generate the vacuum pressure, the suction unit (26) configured to suction the suction object by using the vacuum pressure applied from the vacuum source via the communication passage, and the vacuum pressure sensor (28) configured to output the detection signal corresponding to the vacuum pressure in the communication passage, and the abnormality detection device includes the information acquisition unit (46) configured to acquire information indicating the vacuum pressure in the communication passage on the basis of the detection signal, and the abnormality determination unit (48) configured to determine that the abnormality is present in the case where the first vacuum pressure (VP1) is higher than or equal to the first threshold value (TH1) that is predetermined, the first vacuum pressure being the vacuum pressure in the communication passage in the case where the vacuum pressure is applied from the vacuum source to the communication passage and the suction object is not suctioned by the suction unit.

### (Supplementary Note 2)

In the abnormality detection device according to the Supplementary Note 1, the abnormality determination unit may determine that foreign matter is present in the communication passage in the case where the first vacuum pressure is higher than or equal to the first threshold value.

### (Supplementary Note 3)

In the abnormality detection device according to the Supplementary Note 2, in the case where the first vacuum pressure is higher than or equal to the first threshold value, the abnormality determination unit may determine that the filter (30) provided in the portion of the communication passage between the suction unit and the vacuum pressure sensor is clogged with the foreign matter.

### (Supplementary Note 4)

In the abnormality detection device according to the Supplementary Note 1, the abnormality determination unit may determine that the abnormality is present in the case where the second vacuum pressure (VP2) is lower than or equal to the second threshold value (TH2) that is predetermined, the second vacuum pressure being the vacuum pressure in the communication passage in the case where the vacuum pressure is applied from the vacuum source to the communication passage and the suction object is suctioned by the suction unit.

### (Supplementary Note 5)

The abnormality detection device according to Supplementary Note 1 may further include the notification control unit (50) configured to execute control for notifying that the abnormality is present, in the case where the abnormality determination unit has determined that the abnormality is present.

### (Supplementary Note 6)

The suction device (12) according to the present disclosure includes the abnormality detection device according to any one of Supplementary Notes 1 to 5.

### (Supplementary Note 7)

The abnormality detection method according to the present disclosure detects the abnormality of the suction device (12) configured to suction the suction object by vacuum pressure, the suction device includes the communication passage (20) connected to the vacuum source (14) configured to generate the vacuum pressure, the suction unit (26) configured to suction the suction object by using the vacuum pressure applied from the vacuum source via the communication passage, and the vacuum pressure sensor (28) configured to output the detection signal corresponding to the vacuum pressure in the communication passage, and the method includes the information acquisition step (S3) of acquiring information indicating the vacuum pressure in the communication passage on the basis of the detection signal, and the abnormality determination step (S4) of determining that the abnormality is present in the case where the first vacuum pressure (VP1) is higher than or equal to the first threshold value (TH1) that is predetermined, the first vacuum pressure being the vacuum pressure in the communication passage in the case where the vacuum pressure is applied from the vacuum source to the communication passage and the suction object is not suctioned by the suction unit.

It should be noted that the present invention is not limited to the disclosure described above, and various configurations could be adopted therein without departing from the essence and gist of the present disclosure.

### [REFERENCE SIGNS LIST]

- 12:: suction device
- 14:: vacuum source
- 20:: communication passage
- 26:: suction unit
- 28:: vacuum pressure sensor
- 30:: filter
- 46:: information acquisition unit
- 48:: abnormality determination unit
- 50:: notification control unit
- 100:: abnormality detection device
- TH1:: first threshold value
- TH2:: second threshold value
- VP1:: first vacuum pressure
- VP2:: second vacuum pressure

## Claims

1. An abnormality detection device (100) that detects an abnormality of a suction device (12) configured to suction a suction object by vacuum pressure, the suction device including:
a communication passage (20) connected to a vacuum source (14) configured to generate the vacuum pressure;
a suction unit (26) configured to suction the suction object by using the vacuum pressure applied from the vacuum source via the communication passage; and
a vacuum pressure sensor (28) configured to output a detection signal corresponding to the vacuum pressure in the communication passage,
the abnormality detection device comprising:
an information acquisition unit (46) configured to acquire information indicating the vacuum pressure in the communication passage on a basis of the detection signal; and
an abnormality determination unit (48) configured to determine that the abnormality is present in a case where a first vacuum pressure (VP1) is higher than or equal to a first threshold value (TH1) that is predetermined, the first vacuum pressure being the vacuum pressure in the communication passage in a case where the vacuum pressure is applied from the vacuum source to the communication passage and the suction object is not suctioned by the suction unit.

2. The abnormality detection device according to claim 1,
wherein the abnormality determination unit determines that foreign matter is present in the communication passage in the case where the first vacuum pressure is higher than or equal to the first threshold value.

3. The abnormality detection device according to claim 2,
wherein in the case where the first vacuum pressure is higher than or equal to the first threshold value, the abnormality determination unit determines that a filter (30) provided in a portion of the communication passage between the suction unit and the vacuum pressure sensor is clogged with the foreign matter.

4. The abnormality detection device according to claim 1,
wherein the abnormality determination unit determines that the abnormality is present in a case where a second vacuum pressure (VP2) is lower than or equal to a second threshold value (TH2) that is predetermined, the second vacuum pressure being the vacuum pressure in the communication passage in a case where the vacuum pressure is applied from the vacuum source to the communication passage and the suction object is suctioned by the suction unit.

5. The abnormality detection device according to claim 1, further comprising a notification control unit (50) configured to execute control for notifying that the abnormality is present, in a case where the abnormality determination unit has determined that the abnormality is present.

6. The suction device (12) comprising the abnormality detection device according to any one of claims 1 to 5.

7. An abnormality detection method for detecting an abnormality of a suction device (12) configured to suction a suction object by vacuum pressure, the suction device including:
a communication passage (20) connected to a vacuum source (14) configured to generate the vacuum pressure;
a suction unit (26) configured to suction the suction object by using the vacuum pressure applied from the vacuum source via the communication passage; and
a vacuum pressure sensor (28) configured to output a detection signal corresponding to the vacuum pressure in the communication passage,
the method comprising:
an information acquisition step (S3) of acquiring information indicating the vacuum pressure in the communication passage on a basis of the detection signal; and
an abnormality determination step (S4) of determining that the abnormality is present in a case where a first vacuum pressure (VP1) is higher than or equal to a first threshold value (TH1) that is predetermined, the first vacuum pressure being the vacuum pressure in the communication passage in a case where the vacuum pressure is applied from the vacuum source to the communication passage and the suction object is not suctioned by the suction unit.
